Europäisches Patentamt
European Patent Office
Office européen des brevets

(19)

(11) Publication number: 0 533 314 A2

(12) **EUROPEAN PATENT APPLICATION**

(21) Application number: **92305106.4**

(22) Date of filing: **03.06.92**

(51) Int. Cl.5: **C08L 67/04**, B65D 65/46, //(C08L67/04,1:00),(C08L67/04, 3:00),(C08L67/04,97:00)

(30) Priority: **17.09.91 US 761462**

(43) Date of publication of application: **24.03.93 Bulletin 93/12**

(84) Designated Contracting States: **AT BE CH DE DK ES FR GB GR IT LI LU MC NL PT SE**

(71) Applicant: **NOVACOR CHEMICALS (INTERNATIONAL) S.A.**

**Fribourg, Canton of Fribourg(CH)**

(72) Inventor: **Kwok, John**
**135 Masin Road**
**Holden, Mass. 01522(US)**
Inventor: **Lunt, James**
**144 Braman Road**
**Sterling, Mass. 01564(US)**
Inventor: **Makuc, James M.**
**319 East Main Street, Apartment M-11**
**Marlborough, Mass. 01752(US)**
Inventor: **Castriotta, Michael**
**151 Oak Street**
**Clinton, Mass. 01510(US)**

(74) Representative: **Jukes, Herbert Lewis et al**
**Swann, Elt & Company 31 Beaumont Street**
**Oxford OX1 2NP (GB)**

(54) **Biodegradable polyester compositions.**

(57) Co and homopolymers of lactic acid and glycolic acid may be blended with polysaccharides to improve their physical and thermal properties.

FIGURE 1
VST OF BASE AND FILLED POLYMERS

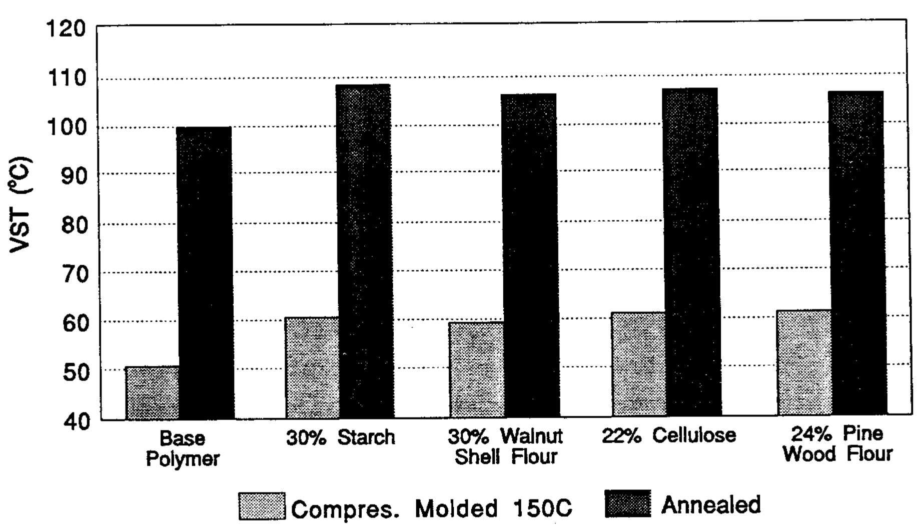


EP 0 533 314 A2

The present invention relates to biodegradable compositions. More particularly the present invention relates to biodegradable compositions of degradable polymers and naturally occurring degradable fillers such as polysaccharides, and particularly starches and cellulose (e.g. polysaccharides of D glucose with alpha (1→4 linkages) (e.g. alpha amylose or amylopectin as in starch) and polysaccharides of D glucose with beta (1→4 linkages) as in cellulose.

There has been an increasing awareness of the need for degradable polymeric compounds. Several early approaches to this need were to fill synthetic polymers with degradable fillers, such as starch. This approach led to the biodegradable polyethylene garbage bags and the like. In theory the starch filler would degrade and leave a porous matrix of polymer which was supposed to break down.

The next development in this area was the starch polymers. The NOVON (trademark) polymers sold by Warner Lambert are representative of such polymers. This type of polymer is described in South African patent 8400658. There is no reference to the use of the fillers of the present invention in this reference

From the early 1970's there has been work in the area of lactide polymers. Generally such polymers have also been directed to pharmaceutical applications such as the sorbable sutures. For these reasons there has not been any great interest in filling such systems. WO application 90/01521 in the name of the Battelle Memorial Institute contains a good discussion of the developments in this field. Battelle teaches that fillers may be used in their plasticized compositions but fails to make any distinction about any type of filler (Page 20 lines 17 and 18).

The most relevant art applicants have been able to locate is United States Patent 3,844,987 issued October 29, 1974 to Clendinning et al, assigned to Union Carbide. The patent relates to planters for tree seedlings. The planters comprise a biodegradable polymer filled with various naturally occurring biodegradable products such as sawdust, potato starch, linen, wood pulp, tree bark, cotton seed hulls and the like (Col. 3, lines 35 through 47). The base polymer in U.S. patent 3,844,987 has the formula

$$\overset{O}{\phantom{x}}$$

$$-O(CH_2)_x - C -$$

wherein x is an integer having a value of 2,3 and 5-7, preferably 5. Specifically the patent excludes lactic acid and glycolic acid polymers. Further, the polymers are not branched as there are no substituents on the polymer backbone.

There are really two different problems which the present invention seeks to overcome. The biodegradable polymers used in accordance with the present invention have a fairly low modulus. The broadest aspect of the present invention seeks to improve the modulus and softening temperature of the polymers. This is accomplished while maintaining the degradable features of the polymers. A second more preferred aspect of the present invention seeks to further improve the heat distortion under load temperature or to raise the softening temperature of the polymers while maintaining biodegradability. This aspect of the invention arises when the degradable polymer or degradable polymer alloy containing the fillers of the present invention comprise not less than 80 weight % of one or more polymers in a D or L configuration.

In its broadest aspect the present invention provides a biodegradable composition characterised by comprising:

(i) from 98 to 40 weight % of one or more polymers comprising polymers containing structural units of one or more monomers selected from lactic acid, lactide, glycolic acid, and glycolide; and

(ii) from 2 to 60 weight % of one or more biodegradable fillers.

In a further aspect the present invention provides the above compositions in which said polymers contain at least 80 weight % of the structural units in either the D or L configuration. Most preferably the compositions which contain one or more polymers having at least 80 weight % of structural units in the D or L configuration are annealed at a temperature above the Tg of said one or more polymers.

In the accompanying drawings, which are by example:

Figure 1 shows the Vicat Softening Temperatures of various compositions of the present invention together with the Vicat Softening Temperature for the base polymer.

Figures 2 and 3 are Differential Scanning Thermographs for two blends of the present invention which have been annealed for specified times.

The polymers of the present invention may be produced using a number of techniques. The polymers may be prepared using classical chemistry such as the polymerization of lactic acid or the ring opening polymerization of lactides.

In the preferred aspect of the present invention the one or more polymers may have an asymmetric carbon atom in at least some of the monomer residues. The polymer may contain at least 80, preferably 90 to 100, weight % of structural units in the either the D or L configuration (e.g. not prepared from an equal mixture of D,L monomers) preferably the L configuration and the balance of one or more structural units in the L or meso configuration, or the D or meso configuration respectively.

The polymeric matrix may be a blend of polymers. In the preferred embodiments of the present invention if a blend of polymers is used the blend may comprise two or more, preferably two, polymers comprising at least one polymer having a predominant amount of structural units in the L configuration and the balance of structural units in the D, or meso configuration; and at least one polymer having a predominant amount of structural units in the D configuration and the balance of structural units in the L, or meso configuration. In such an alloy it is believed that if the polymers have opposite configurations the individual molecules may interact and spiral or coil about each other to enhance the stiffness over that of a single polymer. Preferably the mixture of polymers will comprise a polymer comprising from 100 to 80 weight % of structural units in the L configuration and the balance of structural units in the D, or meso configuration, and the balance a polymer comprising from 100 to 80 weight % of structural units in the D configuration and the balance structural units in the L or meso configuration.

In the preferred embodiment of the present invention if the polymeric matrix comprises a blend of homopolymers each having at least 80% D or 80% L the weight ratio of the components in the blend may range from 0:100 to 100:0. If the polymeric matrix comprises homopolymers containing less than 100% of the structural units in the D or L form, but with least 80 weight % of the structural units in the D or L configuration and the balance in the other configuration or the meso configuration then the ratio of components in the mixture may still range from about 0:100 to 100:0.

The biodegradable compositions of the present invention may comprise from 2 to 60, preferably from 20 to 50 weight % of an organic filler. Most preferably the filler will be a cellulosic filler, preferably selected from starch, functionalized starch, cellulose, functionalized cellulose, wood flour, flour of nut shells, cotton and linen fibre, flock, or flour or a mixture thereof Some fillers may be selected from starch, functionalized starch, $\alpha$-cellulose, functionalized cellulose, wood flour and nut shell flour or a mixture thereof.

The compositions of the present invention may be prepared by solution or melt blending the ingredients. In solution blending, the ingredients are blended in one or more common or miscible solvents. The solutions containing the ingredients are mixed then the solvent is removed, typically by evaporation. In melt blending a polymeric melt of the ingredients is formed. For example, the ingredients may be tumble blended prior to metering into an extruder or an injection molder, blow molder, film former (both blown and extruded) or a co-extruder to produce pellets films, laminates or parts. The operating conditions for each machine will depend on that machine's characteristics. Optimizing the operating conditions for any particular machine will involve normal routine, non inventive experimentation. Typically extruders may operate at temperatures from about 70 to 220, preferably from 100 to 180°C and at screw rates (for a single screw extruder having a L:D ratio of about 20:1) from 80 to 150, typically 100 to 120 RPM's.

Conventional additive such as heat and light stabilizers and antioxidants, processing aids such as mold release aids and lubricating agents and other additives well known to those skilled in the art may be added in amounts up to a total of about 15 preferably from 0.1 to 10 weight %.

The above compositions exhibit improved tensile modulus and softening temperatures over the unfilled polymers and in the preferred embodiment of the invention further improved high heat properties such as softening temperature and heat distortion temperature upon annealing of the blend. The filler may be used in an amount from 2 to 60 preferably from 5 to 50 most preferably from 20 to 50 weight % of the composition. In accordance with the broadest embodiment of the present invention the modulus and tensile properties of the compositions of the present invention increase with increasing filler content. Surprisingly, in the preferred aspect of the present invention it has been found that if the compositions containing one or more polymers containing at least 80 weight % of structural units in either the D or L configuration are annealed above the Tg of said one or more polymers the heat properties of the composition are further improved. Without wishing to be bound by theory it is believed that in the preferred embodiments of the present invention the fillers may be acting as nucleating agents to increase the rate and/or degree of crystal formation in the compositions. To increase crystallinity typically the compositions may be heated at temperatures from 70 to 150°C for a time to allow nucleation and crystallinity to develop, preferably less than about 10, most preferable from about 2 to 6 hours.

The compositions of the present invention are useful in a number of applications and particularly disposable house wares including cups, plates, cutlery, and disposable food containers including cups, containers such as those used for yogurt or salad, and those used for food such as hamburgers (e.g. clamshells).

The following examples are intended to illustrate the invention and not limit it. In the examples unless other wise indicated parts are parts by weight and % means weight %.

Example 1

A base polymer was prepared from a monomer mixture comprising 80 weight % of lactide monomer in the L configuration and 20 weight % of a lactide monomer mixture comprising a 50:50 mixture of D and L lactide. This is an example of polymer compositions coming within the preferred embodiment of the present invention. The polymer was prepared using a conventional polymerization in the presence of a tin octoate catalyst to yield a polymer having a molecular weight of about 100,000. The base polymer was then blended with the following fillers: 30% starch, 30% Walnut flour, 22% alpha cellulose, and 24% pine flour. The organic fillers and polymer were melt blended and extruded using a single screw extruder at a temperature of 150°C at a 100 RPM's. The extruder had an L:D ratio of 20:1 and a screw diameter of about 2 cm. The extruded strands were cooled and chopped to pellets. The resulting pellets were compression moulded to form a sheet 1/8 inch thick. The sheet was divided into two samples. One sample was tested as formed for the Vicat Softening Temperature and the other sample was annealed for 22 hours at 75°C. For comparison a sample of base polymer was extruded and compression molded in the same manner as the filled samples. The results are set forth in Figure 1. The results show an increased Vicat softening temperature for the samples filled with organic fillers. Furthermore, the results show that on annealing the softening temperature may be increased to above 100°C. From a practical point of view this is quite significant as one of the limiting factors for the base polymer is its rather low Vicat softening temperature of about 50°C which even after annealing does not exceed 100°C.

Example 2

A polymer was prepared from a monomer composition comprising 80 weight % of D, L lactide in a 50:50 ratio of D, and L monomers and 20 weight % of L lactide. The polymer contained a total of 60 weight % of structural units in the L configuration and thus is an example of the broadest aspect of the present invention. The polymer was blended with the following fillers: 10% and 30% unfunctionalized starch, 30% functionalized starch, and 25% alpha cellulose. The compositions were injection molded into test pieces and tested, without annealing for the following properties:

| | |
|---|---|
| - Tensile Strength: | ASTM - D638 |
| - Tensile Modulus: | ASTM - D638 |
| - Tensile Elongation: | ASTM - D638 |
| - Flex Modulus: | ASTM - D790 |
| - Flex Strength: | ASTM - D790 |
| - Vicat Softening Temperature (VST): | ASTM - 1525 |

The results of the tests are set forth in Table 1.

**TABLE 1**

| Materials | IZOD Impact Ft-lb/in | Tensile Strength PSI | Tensile Modulus KPSI | Tensile Elongation % | Flex Modulus KPSI | Flex Strength PSI | VST °C |
|---|---|---|---|---|---|---|---|
| Polymer | 0.4 | 6660 | 525 | 1.5 | 520 | 12420 | 50.7 |
| 25% Alpha Cellulose | 0.3 | 7450 | 830 | 1.6 | 800 | 13200 | 56.8 |
| 30% Functionalized Starch | 0.2 | 5300 | 630 | 0.9 | 600 | 8990 | 53.4 |
| 30% Unfunctionalized Starch | 0.3 | 5420 | 575 | 1.0 | 590 | 8860 | 53.8 |
| 10% Unfunctionalized Starch | 0.3 | 5685 | 541 | 1.1 | 545 | 10722 | 48.7 |

Table 1 shows that the use of organic fillers improves the tensile modulus and flex modulus of the polymers.

Example 3

Compounds of the polymer of Example 1 with 30% starch and with 25% alpha cellulose were prepared as in Example 1. Differential Scanning Calorimetry (DSC) was taken of the samples as molded, and annealed for 1, 2, and 4 hours at 70 ° C. The thermographs show the development of a crystallisation and a definite melting temperature over a period of annealing. Figure 2 is the thermograph for the polymer 30% starch blend and Figure 3 is the thermograph for the polymer 25% alpha cellulose composition.

In the present application's disclosure of the present invention, any numerical value includes the precise value and any value "about" or "essentially" or "substantially" the same as the precise value. The wording of the appended claims and abstract is incorporated into the present description.

**Claims**

**1.** A biodegradable composition, characterised by comprising:
(i) from 98 to 40 weight % of one or more polymers containing structural units of one or more monomers selected from lactic acid, lactide, glycolic acid, and glycolide; and
(ii) from 2 to 60 weight % of one or more biodegradable fillers.

**2.** A biodegradable composition according to claim 1, characterised by said biodegradable filler is a polysaccharide.

**3.** A biodegradable composition according to claim 2, characterised by said biodegradable filler is selected from starch, functionalized starch, cellulose, functionalized cellulose, wood flour, flour of nut shells, and cotton and linen fibre, flock, or flour or a mixture thereof.

**4.** A biodegradable composition according to claim 3, characterised by said biodegradable filler is selected from starch, $\alpha$-cellulose, wood flour, and nut shell flour or a mixture thereof.

**5.** A biodegradable composition according to claim 4, characterised by said biodegradable filler is a cellulosic filler and is present in an amount from 5 to 50 weight %.

**6.** A biodegradable composition according to claim 5, characterised by said one or more polymers comprises a polymer comprising from 80 to 100 weight % of structural units in either the D or L configuration.

**7.** A biodegradable composition according to claim 6 characterised by said one or more polymers is a homopolymer of lactic acid or lactide.

**8.** A biodegradable composition according to claim 7, characterised by said polymer comprises from 90 to 100 weight % of structural units in either the L or D configuration.

**9.** A biodegradable composition according to claim 6, characterised by said one or more polymers is a homopolymer of glycolic acid or glycolide.

**10.** A biodegradable composition according to claim 9, characterised by said polymer comprises from 90 to 100 weight % of structural units in either the L or D configuration.

**11.** A biodegradable composition according to claim 6, characterised by said one or more polymers comprises a blend of two or more polymers comprising at least one polymer having at least 80 weight % of structural units in the L configuration; and at least one polymer having at least 80 weight % of structural units in the D configuration.

**12.** A biodegradable composition according to claim 11, characterised by said blend comprises a blend of two polymers.

**13.** A biodegradable composition according to claim 12, characterised by the weight ratio of polymer containing at least 80 or from 100 to 80 weight % of structural units in the L configuration to the polymer containing at least 80 or from 100 to 80 weight % of structural units in the D configuration is

from 100:0 to 0:100.

**14.** A biodegradable composition according to claim 6, characterised by having been annealed at a temperature above the Tg of said one or more polymers.

**15.** A biodegradable composition according to claim 14, characterised by having been annealed at a temperature from 70 to 150 ° C.

**16.** A biodegradable composition according to claim 7, characterised by having been annealed at a temperature above the Tg of said one or more polymers.

**17.** A biodegradable composition according to claim 16, characterised by having been annealed at a temperature from 70 to 150 ° C.

**18.** A biodegradable composition according to claim 9, characterised by having been annealed at a temperature above the Tg of said one or more polymers.

**19.** A biodegradable composition according to claim 18, characterised by having been annealed at a temperature from 70 to 150 ° C.

**20.** A disposable household ware or food container characterised by comprising a biodegradable composition comprising:
(i) from 98 to 40 weight % of one or more polymers containing structural units of one or more monomers selected from lactic acid, lactide, glycolic acid, and glycolide; and
(ii) from 2 to 60 weight % of one or more biodegradable fillers..

**21.** A disposable household ware or food container according to claim 20, characterised by said biodegradable composition said biodegradable filler is a polysaccharide.

**22.** A disposable household ware or food container according to claim 21, characterised by said biodegradable filler is selected from starch, functionalized starch, cellulose, functionalized cellulose, wood flour, flour of nut shells, and cotton and linen fibre, flock, or flour or a mixture thereof.

**23.** A disposable household ware or food container according to claim 22, characterised by said biodegradable filler is selected from starch, $\alpha$-cellulose, wood flour, and nut shell flour or a mixture thereof.

**24.** A disposable household ware or food container according to claim 23, characterised by said biodegradable filler is a cellulosic filler and is present in an amount from 5 to 50 weight %.

**25.** A disposable household ware or food container according to claim 24, characterised by said one or more polymers comprises a polymer comprising from 80 to 100 weight % of structural units in either the L or D configuration.

**26.** A disposable household ware or food container according to claim 25, characterised by said one or more polymers is a homopolymer of lactic acid or lactide.

**27.** A disposable household ware or food container according to claim 26, characterised by said polymer comprises from 90 to 100 weight % of structural units in the L or D configuration.

**28.** A disposable household ware or food container according to claim 25, characterised by said one or more polymers is a homopolymer of glycolic acid or glycolide.

**29.** A disposable household ware or food container according to claim 28, characterised by said polymer comprises from 80 to 100 weight % of structural units in the L or D configuration.

**30.** A disposable household ware or food container according to claim 25, characterised by said one or more polymers comprises a blend of two or more polymers comprising at least one polymer having at least 80 weight % of structural units in the L configuration; and at least one polymer having at least 80

weight % of structural units in the D configuration.

**31.** A disposable household ware or food container according to claim 30, characterised by said blend comprises a blend of two polymers.

**32.** A disposable household ware or food container according to claim 31, characterised by the weight ratio of polymer containing the at least 80 or from 100 to 80 weight % of structural units in the L configuration to the polymer having at least 80 or from 100 to 80 weight % of structural units in the D configuration is from 100:0 to 0:100.

**33.** A disposable household ware or food container according to claim 25, characterised by having been annealed at a temperature above the Tg of said one or more polymers.

**34.** A disposable household ware or food container according to claim 33, characterised by having been annealed at a temperature from 70 to 150° C.

**35.** A disposable household ware or food container according to claim 26, characterised by having been annealed at a temperature above the Tg of said one or more polymers.

**36.** A disposable household ware or food container according to claim 35, characterised by having been annealed at a temperature from 70 to 150°C.

**37.** A disposable household ware or food container according to claim 28, characterised by having been annealed at a temperature above the Tg of said one or more polymers.

**38.** A disposable household ware or food container according to claim 37, characterised by having been annealed at a temperature from 70 to 150°C.

FIGURE 1

VST OF BASE AND FILLED POLYMERS

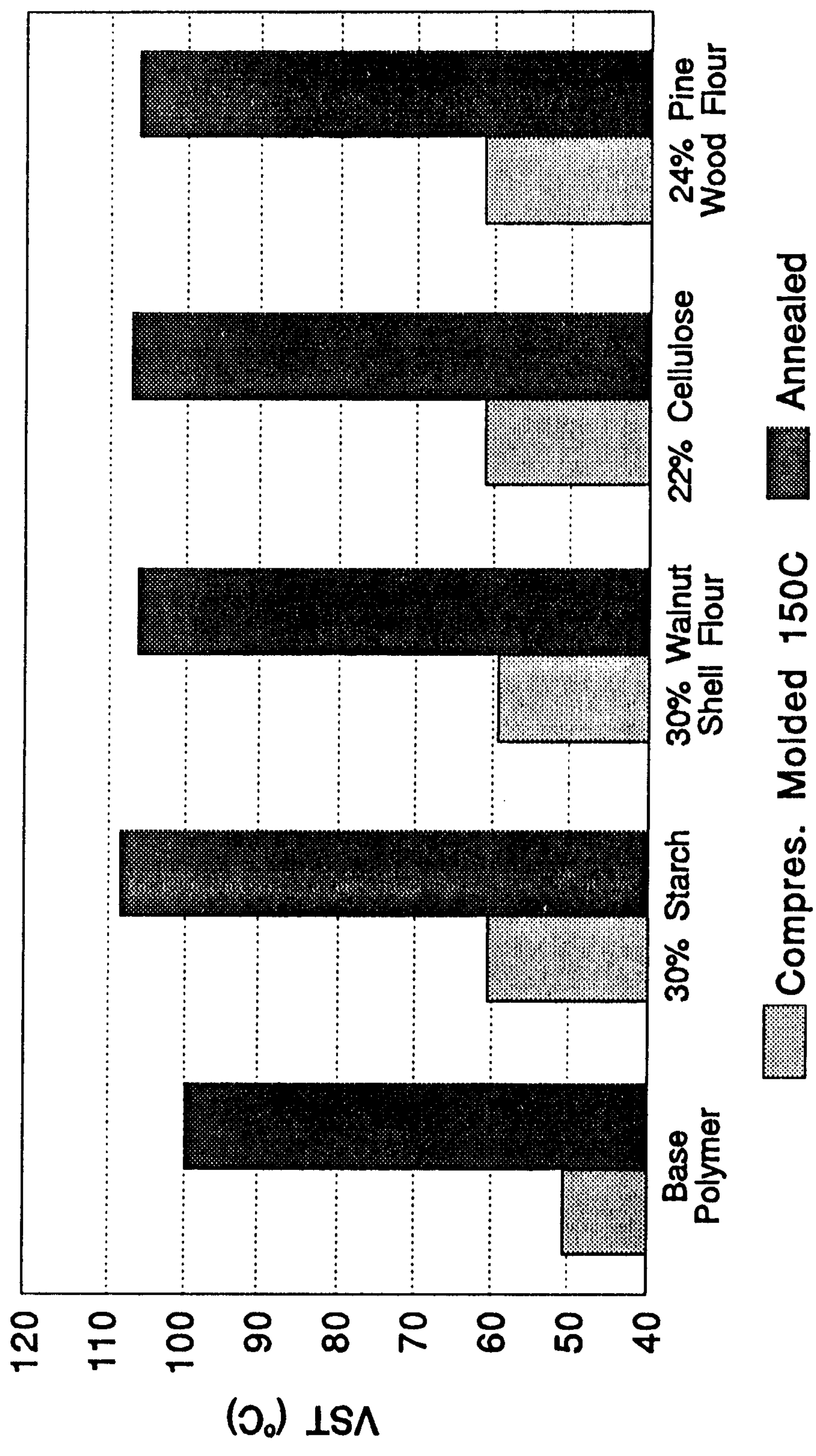

FIGURE 2

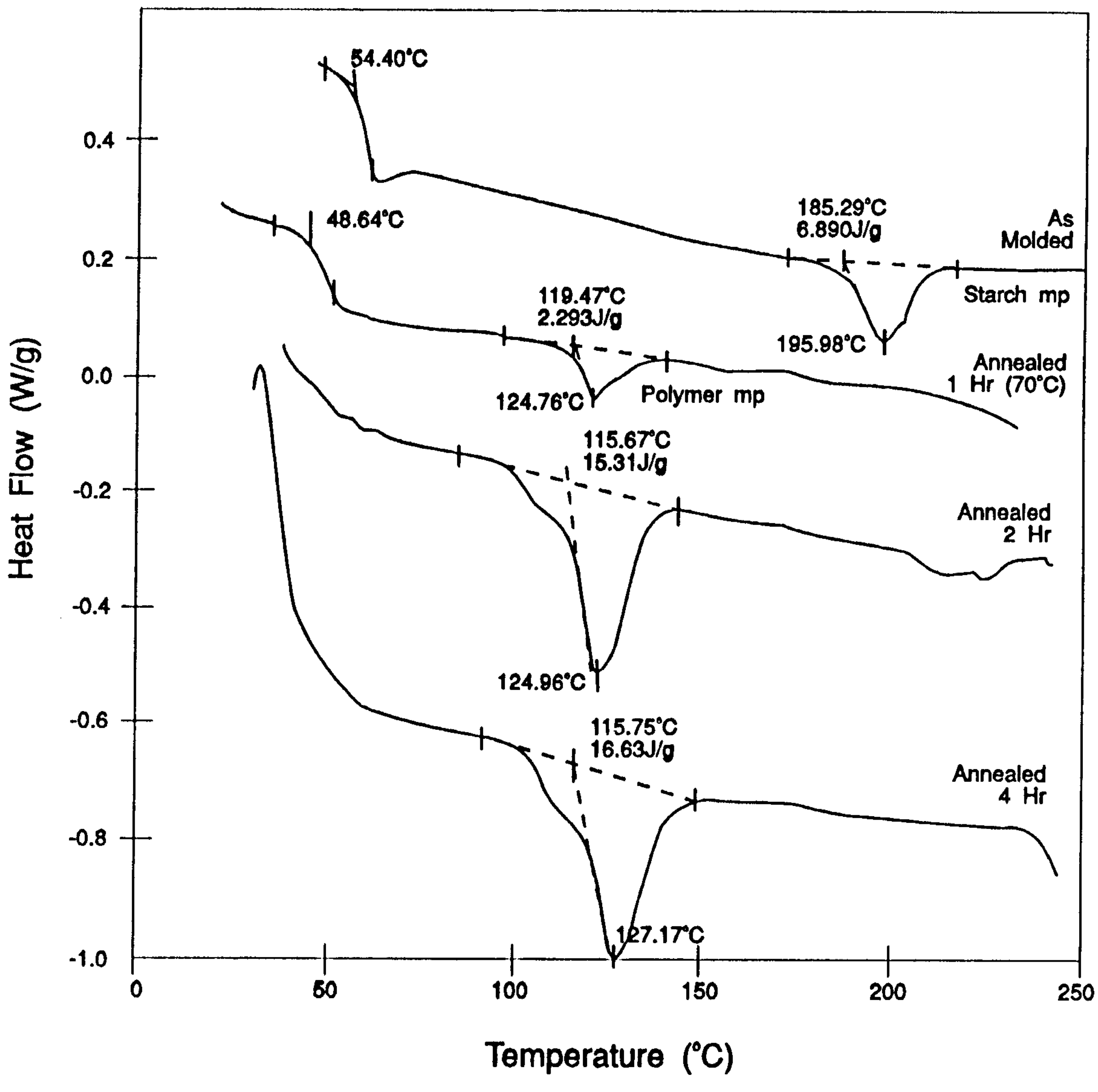
54.40°C
48.64°C
185.29°C
6.890J/g
As
Molded
Starch mp
195.98°C
119.47°C
2.293J/g
124.76°C
Polymer mp
Annealed
1 Hr (70°C)
115.67°C
15.31J/g
Annealed
2 Hr
124.96°C
115.75°C
16.63J/g
Annealed
4 Hr
127.17°C
Heat Flow (W/g)
0.4
0.2
0.0
-0.2
-0.4
-0.6
-0.8
-1.0
0
50
100
150
200
250
Temperature (°C)

# FIGURE 3

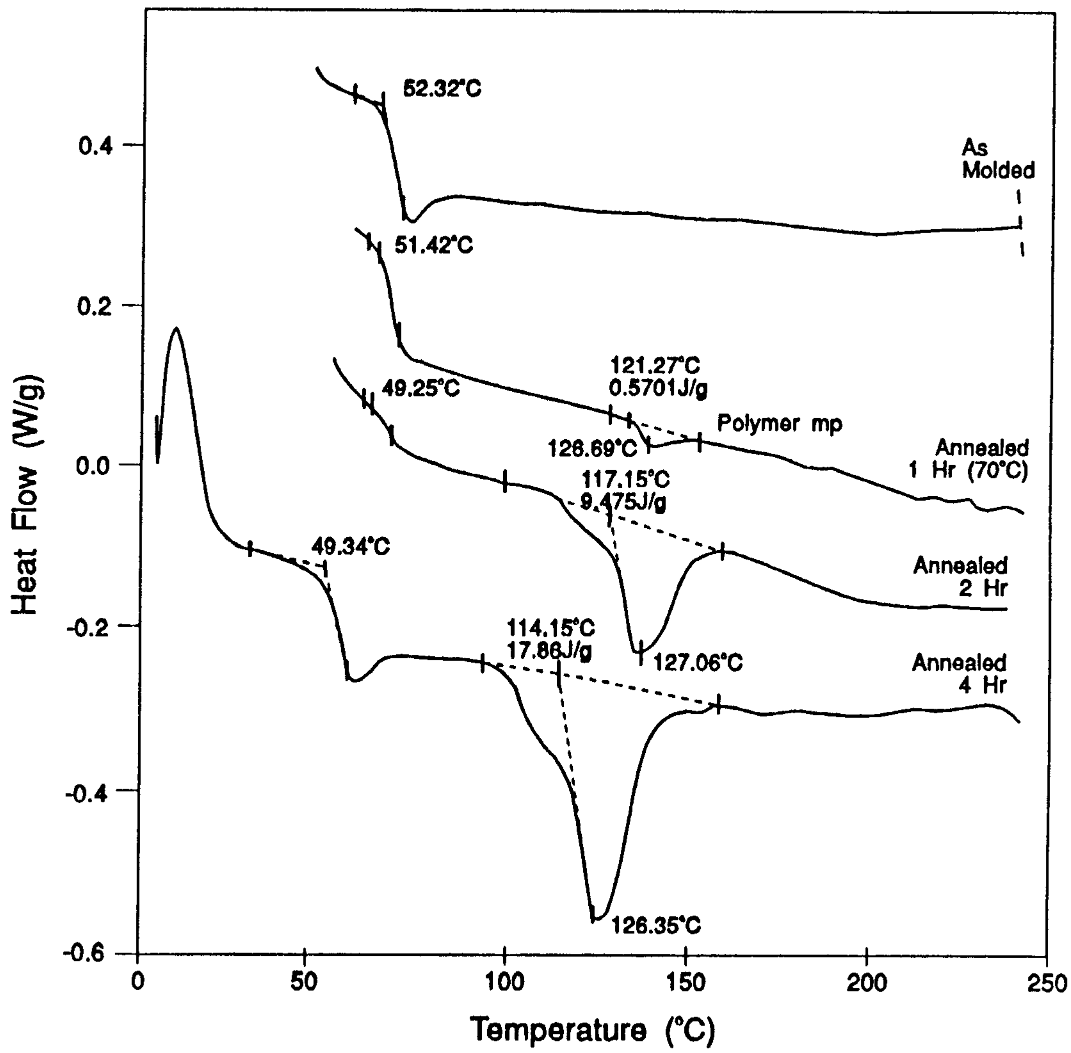

52.32°C
As Molded
51.42°C
121.27°C
0.5701J/g
49.25°C
Polymer mp
126.69°C
Annealed 1 Hr (70°C)
117.15°C
9.475J/g
49.34°C
Annealed 2 Hr
114.15°C
17.86J/g
127.06°C
Annealed 4 Hr
126.35°C
0.4
0.2
0.0
-0.2
-0.4
-0.6
Heat Flow (W/g)
0
50
100
150
200
250
Temperature (°C)